Europäisches Patentamt

European Patent Office

Office européen des brevets

(19)

(11) Veröffentlichungsnummer: **0 164 640**
**A2**

(12) # EUROPÄISCHE PATENTANMELDUNG

(21) Anmeldenummer: **85106550.8**

(22) Anmeldetag: **29.05.85**

(51) Int. Cl.⁴: **F 23 C 7/06**
**B 01 D 53/34**

(30) Priorität: **09.06.84 DE 3421611**

(43) Veröffentlichungstag der Anmeldung:
**18.12.85 Patentblatt 85/51**

(84) Benannte Vertragsstaaten:
**AT DE GB IT NL**

(71) Anmelder: **EC ERDÖLCHEMIE GMBH**
**Postfach 75 20 02**
**D-5000 Köln 71(DE)**

(72) Erfinder: **Becker, Martin, Dipl.-Ing.**
**Am Frohnweiher 9**
**D-5000 Köln 71(DE)**

(72) Erfinder: **Ennenbach, Karl-Heinz**
**Ostpreussenallee 8**
**D-4047 Dormagen 1(DE)**

(72) Erfinder: **Haardt, Hans-Jürgen, Dr.**
**Rurstrasse 3**
**D-5024 Pulheim(DE)**

(74) Vertreter: **Mann, Volker, Dr. et al,**
**c/o Bayer AG Konzernverwaltung RP Patentabteilung**
**D-5090 Leverkusen 1, Bayerwerk(DE)**

(54) **Verfahren zur Vernichtung (Totaloxidation) von niederkalorischen Gasgemischen.**

(57) Niederkalorische Gasgemische werden, gegebenenfalls unter Zusatz von Luft, durch Vorwärmung auf eine Temperatur von 500-800°C und anschließende Erhitzung durch Strahlungswärme auf 850-1400°C vernichtet [total oxidiert].

EP 0 164 640 A2

EC Erdölchemie GmbH          Köln-Worringen
                             Ha/by-c

## Verfahren zur Vernichtung (Totaloxidation) von nieder-
## kalorischen Gasgemischen

In mehreren großtechnischen Verfahren, insbesondere solchen, in denen Luftsauerstoff zur Oxidation eingesetzt wird, fallen Abgase an, welche sich nur durch thermische Nachbehandlung (Nachoxidation) reinigen lassen, bevor sie in die Atmosphäre entlassen werden können. Beispiele hierfür sind Abgase aus Verfahren zur Herstellung von Acrylnitril oder Methacrylnitril nach dem Ammoxidationsverfahren aus Propylen oder Isobutylen, Abgase aus Verfahren zur Herstellung von Ethylenoxid aus Ethylen und Luftsauerstoff oder Abgase aus der Herstellung von Phthalsäureanhydrid oder Maleinsäureanhydrid durch Teiloxidation geeigneter Ausgangsstoffe mit (Luft)sauerstoff. Typisch für solche Abgase ist, daß sie einen Heizwert unter 1200 kcal/m$^3$ haben und selber nicht brennen.

Die thermische Nachbehandlung solcher Abgase kann beispielsweise mit Hilfe eines Katalysators auf niedrigem Temperaturniveau etwa bei 300-500°C ablaufen. Es gibt jedoch Fälle, in denen ein Katalysatoreinsatz unwirtschaftlich oder aus Gründen der Abgasqualität nicht

EC 150-Ausland

0164640

möglich ist. Hier bleibt dann nur die energetisch aufwendige Lösung, mit Hilfe einer Stützfeuerung die notwendige Energie zur Oxidation der Abgasinhaltsstoffe einzubringen. Beispielsweise fällt bei der Herstellung von Acrylnitril nach dem Ammoxidationsverfahren ein Abgas an, das mindestens 80 Vol-% Stickstoff, bis zu 15 Vol-% Kohlenmonoxid und Kohlendioxid, bis zu 5 Vol-% Blausäure und $C_3$-Kohlenwasserstoffe sowie restliche Mengen an Sauerstoff, Acetonitril und Acrylnitril enthält; ein solches Abgas fällt mit einer Temperatur von 50-80°C an und hat einen Energieinhalt in Abhängigkeit von der Zusammensetzung von etwa 200-400 kcal/m$^3$. Zur Oxidation von 60.000 m$^3$/Stunde eines solchen Acrylnitril-Abgases müssen etwa 3-4 t/h Heizöl eingesetzt werden. Eine solche thermische Nachbehandlung der Abgase stellt eine beträchtliche Kostenbelastung aller Verfahren dar, bei denen derart zu behandelnde Abgase anfallen.

Es wurde nun ein Verfahren zur Vernichtung (Totaloxidation) von niederkalorischen Gasgemischen gefunden, das dadurch gekennzeichnet ist, daß man ein solches Gasgemisch, gegebenenfalls unter Zusatz von Sauerstoff, auf eine Temperatur von 500-800°C vorwärmt und das vorgewärmte, gegebenenfalls zusätzlichen Sauerstoff enthaltende Gasgemisch durch Strahlungswärme weiter auf 850-1400°C erhitzt.

Zur Totaloxidation und damit Vernichtung von schädlichen organischen Bestandteilen in niederkalorischen Gasgemischen werden diese Gasgemische zunächst auf eine Temperatur von 500-800°C, bevorzugt 600-800°C vorgewärmt.

EC 150

Für den Fall, daß solche niederkalorische Gasgemische einen ungenügenden Sauerstoffanteil zur Totaloxidation der enthaltenen organischen Bestandteile haben, wird diesen Gasgemischen vor der Totaloxidation die erforderliche Menge an Sauerstoff, in bevorzugter Weise in Form von atmosphärischer Luft, zugesetzt. Die erforderliche Menge an Sauerstoff wird in bekannter Weise dadurch kontrolliert, daß man die durch Totaloxidation behandelten Gasgemische auf ihren Sauerstoffgehalt hin überprüft, beispielsweise durch einen Infrarot-Detektor; dieser Sauerstoffgehalt soll am Ende des erfindungsgemäßen Verfahrens etwa 1 - 2 Vol-% im total oxidierten Abgas betragen. Für den Fall, daß zusätzlicher Sauerstoff, beispielsweise in Form von atmosphärischer Luft, erforderlich ist, kann das niederkalorische Gasgemisch getrennt oder gemeinsam mit diesem Sauerstoff (atmosphärische Luft) auf die genannte Temperatur vorgewärmt werden. In bevorzugter Weise werden das niederkalorische Gasgemisch und der erforderliche zusätzliche Sauerstoff (atmosphärische Luft) getrennt vorgewärmt. Durch die getrennte Vorwärmung kann der Sauerstoff (die atmosphärische Luft) auf eine höhere Temperatur als die obengenannte Vorwärmungstemperatur vorgewärmt werden, was eine noch bessere Ausnutzung der Temperatur der total oxidierten Abgase erlaubt. In besonders bevorzugter Weise wird auf diese Art zunächst nur atmosphärische Luft vorgewärmt (in bevorzugter Weise durch die total oxidierten Abgase des erfindungsgemäßen Verfahrens), beispielsweise auf 500-1200°C, bevorzugt auf 800-1100°C, besonders bevorzugt auf 900-1100°C, sodann mit dem niederkalorischen Gasgemisch vermischt, woraufhin dieses Gemisch weiter,

EC 150

0164640

gegebenenfalls in mehreren Stufen, auf die obengenannte
Temperatur vorgewärmt wird.

Das so vorgewärmte Gasgemisch, das gegebenenfalls zusätzlichen Sauerstoff (atmosphärische Luft) enthält,
wird sodann weitestgehend durch Strahlungswärme weiter
auf 850-1400°C, bevorzugt 1000-1400°C, erhitzt, wobei
sich die Totaloxidation der organischen Bestandteile zu
inerten Bestandteilen, wie $CO_2$, $N_2$ und in geringer Menge
überschüssigen $O_2$, abspielt.

Die bereits erwähnte Ausnutzung der Temperatur des
total oxidierten Abgases zur Vorwärmung der niederkalorischen Gasgemische macht das erfindungsgemäße
Verfahren überaus wirtschaftlich und kostengünstig.
Die zur weiteren Erhitzung des vorgewärmten, gegebenenfalls zusätzlichen Sauerstoff (atmosphärische Luft) enthaltenden Gasgemisches erforderliche Energie wird bevorzugt durch die Totaloxidationswärme des Gasgemisches
erzeugt und im Verbrennungsofen aufrechterhalten, so
daß eine laufend zu unterhaltende Stützfeuerung, etwa
um die Verbrennungsrohre herum, entbehrlich ist. Zur
Durchführung des erfindungsgemäßen Verfahrens, vor allem
zur Aufrechterhaltung der erforderlichen Strahlungswärme
im Verbrennungsofen muß daher bevorzugt darauf geachtet
werden, daß die Summe aller Abwärmen, die den Verbrennungsofen verlassen, kleiner oder höchstens gleich ist
der Summe an Wärmeinhalten, die die in das erfindungsgemäße Verfahren einzuspeisenden Abgase und der gegebenenfalls zuzusetzende Sauerstoff (atmosphärische
Luft) einbringen. Als solche eingebrachten Wärmeinhalte
sind die Verbrennungswärmen der im niederkalorischen

EC 150

Gasgemisch enthaltenen organischen Anteile sowie die fühlbare Wärme des niederkalorischen Gasgemisches und des zusätzlichen Sauerstoffs (atmosphärische Luft) zu verstehen. Die Unabhängigkeit der bevorzugten Form des erfindungsgemäßen Verfahrens von äußerer Energiezufuhr und damit seine wirtschaftliche Effizienz werden daher durch weitestgehende Ausnutzung der Wärme des total oxidierten Abgases zur Vorwärmung der zu behandelnden niederkalorischen Gasgemische und gegebenenfalls des zugesetzten Sauerstoffs (atmosphärische Luft) verbessert. Je nach der Eingangstemperatur des zu behandelnden niederkalorischen Abgases und der Verbrennungswärme seiner organischen Inhaltsstoffe kann es daher möglich sein, den total oxidierten Abgasen des erfindungsgemäßen Verfahrens weitere Nutzwärme zu entziehen, bevor diese total oxidierten Abgase in den Kamin entlassen werden. Solche weitere Nutzwärme kann beispielsweise zur Dampferzeugung oder zur Vorwärmung von im Werksverbund stehenden Produktströmen eingesetzt werden.

Zur Aufrechterhaltung der erfindungsgemäßen autothermen Totaloxidation von niederkalorischen Gasgemischen, die ansonsten nur mit Hilfe einer Stützfeuerung verbrannt werden könnten, muß daher in Übereinstimmung mit der obigen Darstellung die nachstehende Wärmebilanz erfüllt werden:

$$\dot{Q}_{RG} + \dot{Q}_{V} + \dot{Q}_{N} \leqq \dot{Q}_{HW} + \dot{Q}_{Zu} \quad ,$$

wobei

EC 150

$\dot{Q}_{RG}$ den abgegebenen Wärmeinhalt des Rauchgases zum Kamin,

$\dot{Q}_V$ die Konvektions- und Strahlungsverluste am Verbrennungsofen und den Rohrleitungen,

$\dot{Q}_N$ die gegebenenfalls zur Erzeugung von Dampf oder zur Produktvorwärmung entnommene Nutzwärme,

$\dot{Q}_{HW}$ den Heizwert des niederkalorischen Gasgemisches und

$\dot{Q}_{Zu}$ die Summe der Wärmeinhalte des zugeführten niederkalorischen Gasgemisches und des gegebenenfalls weiter zugeführten Sauerstoffs (atmosphärische Luft) bedeuten.

Das erfindungsgemäße Verfahren ist durch eine Reihe überraschender und nicht vorhersehbarer Merkmale gekennzeichnet:

1. organische Inhaltsstoffe, wie sie in den erfindungsgemäß zu behandelnden niederkalorischen Gasgemischen vorkommen, reagieren mit Sauerstoff (Luftsauerstoff) bereits ab 400°C, wobei solche Oxidationsreaktionen ab 650°C deutlich beschleunigt werden. Überraschend wurde jedoch gefunden, daß solche Oxidationsreaktionen in den erfindungsgemäß zu behandelnden Gasgemischen erst bei Temperaturen oberhalb 750°C, vielfach sogar erst oberhalb 850°C, einsetzen; damit ist jedoch ein Wärmeaustausch zur Vorwärmung solcher niederkalorischen Gasgemische auf einem hohen Temperatur-

EC 150

niveau, beispielsweise bei einer Temperatur von
500-800°C möglich.

2. Bei allen üblichen Verbrennungsvorgängen ist man
bestrebt, zur Vervollständigung eine große Turbulenz
zu erzeugen, um die Wärmeübertragung durch Konvektion
zu nutzen; insbesondere bei der Abgasverbrennung,
wo auf hohe Vollständigkeit großer Wert gelegt wird,
ist diese Forderung besonders bedeutsam. In überraschendem Maße wird die Totaloxidation im erfindungsgemäßen Verfahren jedoch weitestgehend durch
Strahlungswärme hervorgerufen, wobei man bestrebt
ist, Turbulenz und damit Wärmeübertragung durch Konvektion möglichst weitgehend zu vermeiden.

3. Es ist überraschend, daß im erfindungsgemäßen Verfahren organische Inhaltsstoffe von niederkalorischen
Gasgemischen, sofern sie keine Halogene oder
Chalkogene enthalten, vollständig zu inerten Stoffen
verbrannt werden, die die Atmosphäre nicht belasten,
wie $N_2$, $H_2O$, $CO_2$ und restlicher $O_2$. Nach dem
Kenntnisstand des Fachmanns hätte beispielsweise
erwartet werden müssen, daß, zumindest im oberen
Teil des durch Strahlungswärme hervorgerufenen
Temperaturbereiches von 850-1400°C sich ein $CO$-$CO_2$-
Gleichgewicht einstellen würde.

Zusammenfassend kann also gesagt werden, daß sich im erfindungsgemäßen Verfahren die niederkalorischen Gasgemische zunächst bis zu höheren Temperaturen inert verhalten, dann innerhalb eines kleinen zusätzlichen Bereiches
(in Abhängigkeit vom Heizwert des niederkalorischen Gasgemisches), beispielsweise in einem Temperaturbereich von

EC 150

750 - 1050°C, eine vollständige Totaloxidation einstellt, die zu Abgasinhaltsstoffen führt, die unschädlich für die Atmosphäre sind. Lediglich zur betriebssicheren Durchführung des erfindungsgemäßen Verfahrens und zur Überbrückung kleinerer Schwankungen in der Menge und Zusammensetzung der niederkalorischen Gasgemische, wird das erfindungsgemäße Verfahren oberhalb der Temperatur durchgeführt, die für den Beginn der Totaloxidation soeben angegeben wurde.

Zur weiteren Erhöhung der Betriebssicherheit und der Überbrückung von Schwankungen wird ein Verbrennungsofen mit einer ausreichenden Wärmespeicherfähigkeit benutzt.

Die Erfindung betrifft weiterhin einen Verbrennungsofen zur Vernichtung (Totaloxidation) von niederkalorischen Gasgemischen, der gekennzeichnet ist durch einen gegebenenfalls mit mehrfachen Umlenkungen versehenen Verbrennungskanal, der mit einem wärmespeichernden und Strahlungswärme abgebenden Material umgeben und nach außen gegen Wärmeabstrahlung möglichst weitgehend isoliert ist, der einen oder mehrere Vorwärmer für das zu behandelnde niederkalorische Gasgemisch und/oder gegebenenfalls zugesetzten Sauerstoff (atmosphärische Luft) und/oder das gegebenenfalls zusätzlichen Sauerstoff (atmosphärische Luft) enthaltende Gasgemisch hat und der in üblicher Weise Zuführungsleitungen für das zu behandelnde Gasgemisch, den gegebenenfalls zuzusetzenden Sauerstoff (atmosphärische Luft) und/oder ein Gemisch daraus und einen Kaminanschluß besitzt.

EC 150

In bereits oben beschriebener Weise ist die Vorwärmeinrichtung für die in den Verbrennungsofen einzuführenden Gase in bevorzugter Weise als Wärmeaustauscher im Kaminanschluß ausgebildet. Darüber hinaus kann der Kaminanschluß weitere Wärmeaustauscher enthalten, in denen die fühlbare Wärme des zum Kamin zu leitenden total oxidierten Abgases zur Dampferzeugung und/oder zur Vorwärmung von Produktströmen im übrigen Werksverbund ausgenutzt werden kann.

Der erfindungsgemäße Verbrennungsofen enthält ferner einen Brenner für eine Stützflamme, die hilfsweise eingesetzt werden kann, um den Verbrennungsofen zum Anfahren auf die erforderliche Temperatur zu bringen oder um kurzfristige Störungen in der Zuführung der Gase zu überbrücken.

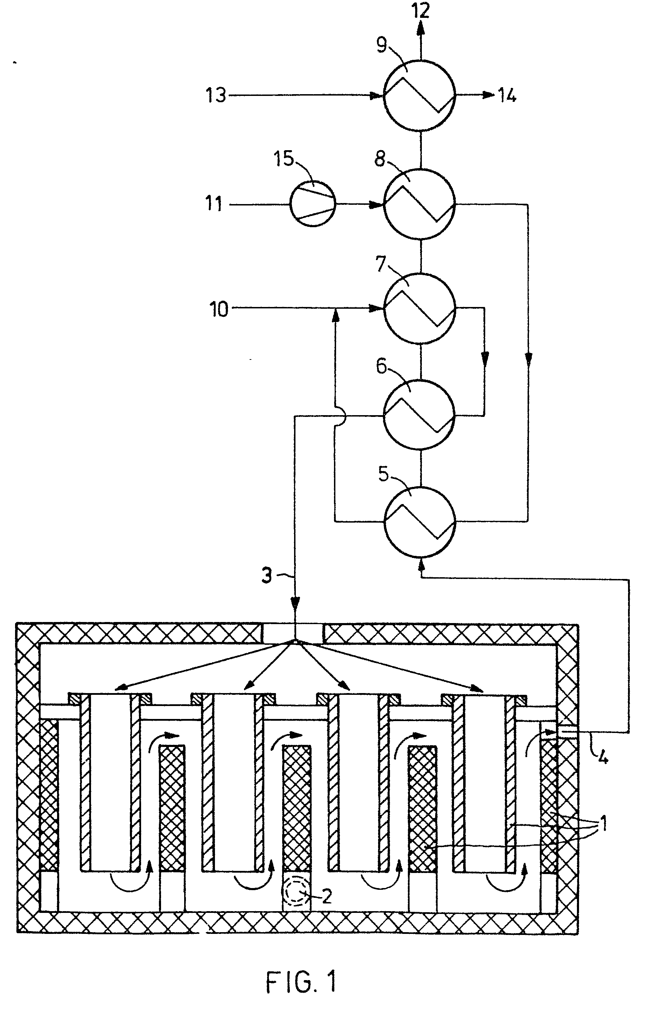

Anhand der beigefügten Figur 1 werden das erfindungsgemäße Verfahren und der erfindungsgemäße Verbrennungsofen beschrieben, wobei eine bevorzugte Ausführungsform mit weitgehender Nutzung der Wärme des total oxidierten Abgases gezeigt wird:

In Fig. 1 bedeuten:
(1) den Verbrennungsofen mit äußerer Wärmeisolierung und innerer Auskleidung des Verbrennungskanals mit wärmespeicherndem und Strahlungswärme abgebendem Material;
(2) einen mit Gas oder Öl zu betreibenden Brenner zum Anfahren und zum Überbrücken von kurzfristigen Störungen;
(3) die Zuführungsleitung für das zu behandelnde, gegebenenfalls Sauerstoff (atmosphärische Luft) enthaltende Gasgemisch;
(4) den Auslaß für das total oxidierte Abgas;

EC 150

(5), (6), (7), (8) und (9) Wärmeaustauscher zur Ausnutzung der fühlbaren Wärme des total oxidierten Abgases;

(10) Zuführung des niederkalorischen Gasgemisches;

(11) Zuführung von Sauerstoff (atmosphärischer Luft) über ein Gebläse (15);

(12) Kaminanschluß;

(13) Wasser oder Dampf (zur Dampferzeugung oder -überhitzung) oder Produktstrom im Werksverbund (zur Aufwärmung), der (9) in aufgewärmter Form (14) verläßt.

Beispielsweise wird ein bei der Herstellung von Acrylnitril durch Ammoxidation von Propylen anfallendes niederkalorisches Gasgemisch (Abgas) (10) mit etwa 20 bis 80°C zugeführt. Dieses niederkalorische Gasgemisch wird mit atmosphärischer Luft, die in (8) und (5) insgesamt auf etwa 1000°C vorgewärmt wurde, gemischt und gelangt mit einer Temperatur von etwa 200 bis 300°C in (7) und (6), wo es auf etwa 700°C erwärmt wird. Dieses vorgewärmte Gemisch gelangt über (3) in den Verbrennungsofen (1) wo das Gemisch aus niederkalorischem Gasgemisch und Luft nach mehrfacher Umlenkung unter dem Einfluß der Strahlungswärme total oxidiert wird und (1) über (4) verläßt und nach Durchströmung der gezeigten Wärmeaustauscher bei (12) in den Abgaskamin geleitet wird.

Zum Anfahren des erfindungsgemäßen Verbrennungsofens und der nachfolgenden Durchführung des erfindungsgemäßen Verfahrens zur Totaloxidation von niederkalorischen Gasgemischen wird der Verbrennungskanal des Verbrennungs-

EC 150

ofens mit Hilfe des Brenners (2) auf etwa 1000-1200°C aufgeheizt. Beim Erreichen dieser Temperatur wird allmählich das niederkalorische Gasgemisch, gegebenenfalls unter Zusatz von Sauerstoff (atmosphärischer Luft) hinzugefahren. Im gleichen Maße wie dieses Gemisch bis zu seinem Höchstwert, in Abhängigkeit von seinem Heizwert, in den Verbrennungsofen gefahren wird, wird der Brenner (2) gedrosselt und schließlich völlig abgeschaltet. Das erfindungsgemäße Verfahren hält sich dann von selbst aufrecht. In ganz analoger Weise kann bei Lastwechseln oder kurzzeitigen Störungen der Brenner wieder zugeschaltet werden, um zu gewährleisten, daß die Ofentemperatur nicht unter die zur Vernichtung der organischen Bestandteile des niederkalorischen Gasgemisches erforderliche Betriebstemperatur sinkt und unverbranntes Abgas in die Atmosphäre entlassen wird.

In den nachfolgenden Beispielen wird gezeigt, daß die Oxidationsreaktion vollständig verläuft (Beispiele 1, 5 und 6), daß bis zu 700°C noch keine Reaktion (oxidative Vernichtung der organischen Bestandteile des niederkalorischen Gasgemisches) stattfindet (Beispiel 2) und daß der Reaktionsbeginn (die Totaloxidation der organischen Bestandteile) oberhalb von 750°C stattfindet (Beispiele 3 und 4).

EC 150

**Beispiele**

**Labor-Verbrennungsapparatur**

Ein Keramikrohr von 2 m Länge und einem Querschnitt von 2,27 $cm^2$ ist in einem elektrischen Heizofen von 1 m Länge eingebettet.

**Beispiel 1**

Ein Stickstoff-Acetonitril (ACT)-Gemisch der unten angegebenen Zusammensetzung als Modell-Abgas wurde in Gegenwart von Luft durch das elektrisch beheizte Keramikrohr bei einer Temperatur von 1055°C geleitet. Dem Gemisch wurde soviel Luft zugeführt, bis im Gasausgang ein $O_2$-Gehalt von 2 Vol-% vorlag (vgl. Tab.).

**Beispiel 2**

450 Nl/h Abgas bestehend aus $N_2$ mit 2,2 Vol-% $O_2$, 2,75 Vol-% $CO_2$, 2,4 Vol-% CO, 0,15 Vol-% $C_3H_6$, 0,45 Vol-% $C_3H_8$, 2,17 g Acetonitril, 0,63 g Blausäure und 0,05 g Acrylnitril pro $Nm^3$ Abgas wurden bei 700°C ohne Luftzufuhr durch das elektrisch beheizte Keramikrohr geleitet (vgl. Tab.).

**Beispiele 3 und 4**

In den Beispielen 3 und 4 wurde Abgas mit der Zusammensetzung wie in Beispiel 2 durch das elektrisch beheizte

EC 150

Keramikrohr bei einer Temperatur von 750°C geleitet und langsam auf 1050°C hochgeheizt. Mit Ausnahme des $O_2$-Gehaltes wurden vom Gasausgang keine Analysen durchgeführt. Der $O_2$-Gehalt zeigte das Einsetzen der Oxidation in Abhängigkeit von der Temperatur an. Der im Gasausgang abfallende $O_2$-Gehalt von 2,2 auf 0 % wurde durch Einleiten von Zusatzluft auf einen $O_2$-Gehalt von 2 % eingestellt.

EC 150

Tabelle zu Beispiel 1:

| Gaseingang | | | Temp. °C | Gasgeschwindigkeit m/sec | Gasausgang | | | |
| --- | --- | --- | --- | --- | --- | --- | --- | --- |
| 1/h $N_2$ | g/h ACT | 1/h Luft | | | Vol-% $O_2$ | g ACT | Vol-% CO | Vol-% $CO_2$ |
| 225 | 2,64 | 49,5 | 1055 | 1,5 | 2 | - | - | 1,15 |

Tabelle zu Beispiel 2:

| Gaseingang | Temp. °C | Gasgeschwindigkeit m/sec. | Gasausgang | | | | | | | |
| --- | --- | --- | --- | --- | --- | --- | --- | --- | --- | --- |
| | | | % $O_2$ | % $CO_2$ | % CO | % $C_3H_6$ | % $C_3H_8$ | g ACT | g HCN | g ACN |
| 450 Nl/h Abgas, wie beschrieben | 700 | 1,96 | 2,2 | 2,75 | 2,4 | 0,15 | 0,45 | 2,17 | 0,63 | 0,05 |

0164640

## Tabelle zu Beispielen 3 und 4

| | Gaseingang | | | | Gasausgang |
|---|---|---|---|---|---|
| | Abgas | Zusatzluft | Temperatur | Gasgeschwindigkeit | Vol-% $O_2$ |
| | Nl/h | Nl/h | °C | m/sec. | |
| **Beispiel 3** | 270 | — | 750 | 1,25 | 2,2 |
| | 270 | — | 790 | | 1,8 |
| | 270 | — | 820 | | 1,0 |
| | 270 | — | 850 | | 0 |
| | 270 | 66 | 925 | | 2,0 |
| | 270 | 66 | 1000 | | 2,0 |
| | 270 | 66 | 1050 | 2,0 | 2,0 |
| **Beispiel 4** | 450 | — | 750 | 2,05 | 2,2 |
| | 450 | — | 810 | | 2,2 |
| | 450 | — | 895 | | 0,3 |
| | 450 | 110 | 1020 | | 2,0 |
| | 450 | 110 | 1050 | 3,30 | 2,0 |

## Beispiele 5 und 6

In den Beispielen 5 und 6 wurde ein Abgasstrom mit folgender Zusammensetzung eingesetzt:
$N_2$ mit 2,3 Vol-% $O_2$, 2,64 Vol-% $CO_2$, 2,27 Vol-% CO, 0,15 Vol-% $C_3H_6$, 0,39 Vol-% $C_3H_8$, 4,45 g Acetonitril, 1,87 g Blausäure und 0,144 g Acrylnitril pro $Nm^3$ Abgas.

Das Abgas wurde, mit Zusatzluft gemischt, durch das elektrisch beheizte Keramikrohr geleitet und bei 1050-1060°C total oxidiert. Der $O_2$-Gehalt im Gasausgang betrug 2 %. Außer $CO_2$ wurden keine organischen Verbindungen im Gasausgang gefunden.

BC 150

Tabelle zu Beispielen 5 und 6

| Beispiel | Gaseingang | | Temperatur | Gasgeschwindigkeit | Gasausgang | |
| | Abgas Nl/h | Zusatzluft Nl/h | °C | m/sec. | Vol-% $O_2$ | Vol-% $CO_2$ |
|---|---|---|---|---|---|---|
| 5 | 360 | 80 | 1055 | 2,6 | 2,0 | 5,85 |
| 6 | 450 | 100 | 1055 | 3,25 | 2,0 | 5,9 |

EC 150

- 17 -

0164640

## Patentansprüche

1. Verfahren zur Vernichtung (Totaloxidation) von niederkalorischen Gasgemischen, dadurch gekennzeichnet, daß man ein solches Gasgemisch, gegebenenfalls unter Zusatz von Sauerstoff, auf eine Temperatur von 500-800°C vorwärmt und das vorgewärmte, gegebenenfalls zusätzlichen Sauerstoff enthaltende Gasgemisch durch Strahlungswärme weiter auf 850-1400°C erhitzt.

2. Verfahren nach Anspruch 1, dadurch gekennzeichnet, daß man das Abgasgemisch, gegebenenfalls unter Zusatz von Sauerstoff, auf 600-800°C vorwärmt.

3. Verfahren nach Anspruch 1 und 2, dadurch gekennzeichnet, daß man das vorgewärmte Gasgemisch weiter auf 1000-1400°C erhitzt.

4. Verfahren nach Anspruch 1 bis 3, dadurch gekennzeichnet, daß die Strahlungswärme durch die Totaloxidationswärme des Gasgemisches erzeugt bzw. aufrechterhalten wird.

5. Verfahren nach Anspruch 1 bis 4, dadurch gekennzeichnet, daß der zugesetzte Sauerstoff in Form atmosphärischer Luft eingesetzt wird.

6. Verfahren nach Anspruch 1 bis 5, dadurch gekennzeichnet, daß der gegebenenfalls zugesetzte Sauerstoff (atmosphärische Luft) und/oder das niederka-

**EC 150**

lorische Gasgemisch und/oder das gegebenenfalls zusätzlichen Sauerstoff (atmosphärische Luft) enthaltende Gasgemisch durch die Verbrennungsabgase vorgewärmt wird (werden).

7. Verbrennungsofen zur Vernichtung (Totaloxidation) von
niederkalorischen Gasgemischen, gekennzeichnet durch
einen gegebenenfalls mit mehrfachen Umlenkungen versehenen Verbrennungskanal, der mit einem wärmespeichernden und Strahlungswärme abgebenden Material
umgeben und nach außen gegen Wärmeabstrahlung möglichst weitgehend isoliert ist, der einen oder mehrere Vorwärmer für das zu behandelnde niederkalorische Gasgemisch und/oder gegebenenfalls zugesetzten Sauerstoff (atmosphärische Luft) und/oder das
gegebenenfalls zusätzlichen Sauerstoff (atmosphärische Luft) enthaltende Gasgemisch hat sowie in üblicher Weise Zuführungsleitungen für das zu behandelnde Gasgemisch, den gegebenenfalls zuzusetzenden
Sauerstoff (atmosphärische Luft) und/oder ein Gemisch daraus und einen Kaminanschluß besitzt.

8. Verbrennungsofen nach Anspruch 7, gekennzeichnet
durch einen Brenner für eine Stützflamme zum Anfahren
oder zur Überbrückung von Störungen.

9. Verbrennungsofen nach Anspruch 7 und 8, dadurch gekennzeichnet, daß der oder die Vorwärmer als Wärmeaustauscher im Kaminanschluß ausgebildet ist (sind).

10. Verbrennungsofen nach Anspruch 7 bis 9, dadurch gekennzeichnet, daß im Kaminanschluß weitere Wärmeaustauscher angebracht sind.

EC 150

FIG. 1